(19)

Europäisches Patentamt

European Patent Office

Office européen des brevets

(11) **EP 4 375 260 A1**

(12) **EUROPEAN PATENT APPLICATION**
published in accordance with Art. 153(4) EPC

(43) Date of publication:
**29.05.2024 Bulletin 2024/22**

(21) Application number: **21950832.2**

(22) Date of filing: **15.12.2021**

(51) International Patent Classification (IPC):
*C04B 35/56* (2006.01)        *C04B 35/58* (2006.01)
*C04B 35/622* (2006.01)       *G21C 3/62* (2006.01)
*G21C 3/64* (2006.01)         *G21C 21/02* (2006.01)

(52) Cooperative Patent Classification (CPC):
**G21C 3/62; C04B 35/5607; C04B 35/58007;
C04B 35/58092; C04B 35/622; G21C 3/64;
G21C 21/02;** C04B 35/632; C04B 2235/3232;
C04B 2235/3241; C04B 2235/3244;
C04B 2235/3251; C04B 2235/3256;
C04B 2235/404; C04B 2235/422;        (Cont.)

(86) International application number:
**PCT/CN2021/138442**

(87) International publication number:
**WO 2023/000594 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.07.2021  CN 202110831853**

(71) Applicants:
• **China Nuclear Power Technology Research
  Institute
  Co., Ltd
  Shenzhen, Guangdong 518031 (CN)**
• **China General Nuclear Power Corporation
  Shenzhen, Guangdong 518028 (CN)**
• **CGN Power Co., Ltd.
  Shenzen, Guangdong 518028 (CN)**

(72) Inventors:
• **XUE, Jiaxiang
  Shenzhen, Guangdong 518031 (CN)**
• **WU, Lixiang
  Shenzhen, Guangdong 518031 (CN)**
• **ZHANG, Xiansheng
  Shenzhen, Guangdong 518031 (CN)**
• **REN, Qisen
  Shenzhen, Guangdong 518031 (CN)**
• **LIAO, Yehong
  Shenzhen, Guangdong 518031 (CN)**
• **ZHANG, Yongdong
  Shenzhen, Guangdong 518031 (CN)**

(74) Representative: **Westphal, Mussgnug & Partner,
Patentanwälte mbB
Werinherstraße 79
81541 München (DE)**

(54) **HIGH-ENTROPY CERAMIC INERT MATRIX DISPERSION FUEL PELLET AND PREPARATION METHOD THEREFOR**

(57) Disclosed in the present invention are a high-entropy ceramic inert matrix dispersion fuel pellet and a preparation method therefor. The preparation method comprises: S 1, preparing raw material powder into a slurry and mixed powder, respectively; S2, spraying the slurry on the surfaces of rolling fuel particles, and drying to form a coating layer adhered to the surface of the fuel particles; S3, preparing a core biscuit and a core-shell biscuit; S4, loading the core biscuit into the core-shell biscuit, and performing heat treatment to obtain a ceram-ic green body; and S5, performing solution and sintering treatment to form a densified high-entropy ceramic inert matrix dispersion fuel pellet. The high-entropy ceramic inert matrix dispersion fuel pellet is prepared by means of an in-situ reaction-solid solution sintering two-step method, and the characteristics that the fuel pellet is high in heat conductivity, low in swelling, easy to post-process, suitable for industrial production and the like are achieved: the nuclear fuel containment under the condi-tion that a nuclear reactor cladding is damaged is im-

EP 4 375 260 A1

proved, the leakage of the nuclear fuel is prevented, and the nuclear power safety is improved; and the high-temperature resistance of the nuclear fuel is improved, and the application of the nuclear fuel in a high-temperature reactor is promoted.

FIG. 1

(52) Cooperative Patent Classification (CPC): (Cont.)
C04B 2235/428; C04B 2235/5454;
C04B 2235/6581; G21C 3/045; Y02E 30/30

**Description**

**FIELD**

The invention belongs to the technical field of nuclear fuel, and particularly relates to a high-entropy ceramic inert matrix dispersion fuel pellet and a preparation method thereof.

**BACKGROUND**

With the development of industry, the demand for energy is also increasing, and nuclear energy as a clean energy source is highly favored by all walks of life. With the rapid growth in the utilization of nuclear energy, the ensuing safety issues cannot be ignored. Among them, it is important to ensure the safety of nuclear reactor that the reactor core fuel does not melt or leak under extreme accident environments. At present, cladding is mainly used to ensure that the nuclear fuel does not leak, but the possibility of cladding breakage still exists. The fully ceramic coated fuel (FCM) proposed by the United States greatly improves the safety by adopting SiC inert matrix. However, the thermal conductivity of SiC inert matrix is lower than 10W/m·K after irradiation, which leads to an easy increase of fuel center temperature, and at the same time, the SiC inert matrix of FCM will be eroded by fission products, such as Pd, Ag, and Cs, etc., and the safety permissible temperature is below 1600°C.

Zirconium carbide (ZrC), as an ultra-high temperature ceramic, has excellent high temperature stability (melting point of 3530°C and no high temperature phase transition), and has a great prospect as an inert matrix for the new type of reactor dispersion fuel because of its small neutron absorption cross section, resistance to corrosion by the nuclear fission products, high thermal conductivity after irradiation, and resistance to corrosion by lead-bismuth and molten salt. However, the sintering temperature of ZrC is as high as about 2200°C, and high-temperature sintering is prone to cause serious coarsening of the microstructure of the material. Moreover, the sintering process of ZrC usually requires the addition of sintering aid, and the use of sintering aid not only reduces its high temperature performance, but also reduce its comprehensive performance such as corrosion resistance and radiation resistance.

**SUMMARY**

The technical issue to be addressed by the invention is to provide a high-entropy ceramic inert matrix dispersion fuel pellet with low sintering temperature, high thermal conductivity, and low swelling rate, and a preparation method of the high-entropy ceramic inert matrix dispersion fuel pellet.

The technical solution adopted by the invention to solve the above technical issue is to provide a high-entropy ceramic inert matrix dispersion fuel pellet, which includes the following steps:

S1, preparing a raw material powder into a slurry and a mixed powder respectively; and
wherein the raw material powder includes five or more metal powders, metal oxide powders or metal hydride powders;

S2, spraying the slurry on the surface of the rolling fuel particles, and drying to form a coating layer adhered to the surface of the fuel particles;

S3, mixing a part of the mixed powder with fuel particles with the coating layer in proportion, and pressing to form a columnar core biscuit; pressing another part of the mixed powder to form a cylindrical core-shell biscuit;

S4, loading the core biscuit into the core-shell biscuit, and performing heat treatment under a first set atmosphere to make the raw material powder in the core biscuit and core-shell biscuit reacts in situ to obtain a ceramic blank; and

S5, performing solution and sintering treatment on the ceramic blank in a second set atmosphere to form a densified high-entropy ceramic inert matrix dispersion fuel pellet.

Preferably, the metal in the metal powder, metal oxide powder and metal hydride powder includes at least five of Zr, Ti, Nb, Ta, V, Cr, Mo, and W; and a particle size of the raw material powder is 10 nm to 200 $\mu$m.

Preferably, step S1 includes the following steps:

S1.1, mixing the raw material powder, a dispersant and an organic solvent to form the slurry; and

S1.2, drying a part of the mixed slurry to form the mixed powder; or, mixing the raw material powder with a dispersant to form the mixed powder.

Preferably, in the slurry, the mass ratio of the organic solvent to the raw material powder is 1:1 to 3:1; and the mass percentage of the dispersant is 0.5% to 4% of the raw material powder.

Preferably, the dispersant is at least one of polyethyleneimine and tetramethylammonium hydroxide; and the organic solvent is at least one of anhydrous ethanol and acetone.

Preferably, in step S2, the fuel particles include at least one of TRISO particles, $UO_2$, UC, $UC_2$, UN, UCN, UCO, $U_3Si_2$, U alloys, $PuO_2$, PuC, PuN and Pu alloys; and

wherein the core of the TRISO particles includes at least one of $UO_2$, UC, $UC_2$, UN, UCN, UCO, $U_3Si_2$ and U alloys.

Preferably, in step S2, heating to 50°C to 100°C while the fuel particles are rolling; and spraying the slurry on the surface of the fuel particles by using a pneumatic spray device.

Preferably, in step S3, the core biscuit is molded at a pressure of 10 MPa to 100 MPa; and the core-shell biscuit is molded at a pressure of 30 MPa to 400 MPa.

Preferably, in step S4, the temperature of the heat treatment is 800°C-1200°C; and

in step S5, the temperature of solution and sintering treatment is 1300°C-1550°C.

Preferably, in the case where the raw material powder is a mixture of five or more metal powders, five or more metal oxide powders, or five or more metal hydride powders, in step S4, the first set atmosphere is nitrogen;

under a nitrogen atmosphere, each metal powder, metal oxide or metal hydride respectively reacts in situ with nitrogen to generate a nitride ceramic; and

in step S5, the second set atmosphere is vacuum, argon, helium or nitrogen.

Preferably, the molar ratio between each of the powders of the raw material powder is 1:1.

Preferably, the raw material powder further includes C powder or Si powder;

in step S4, the first set atmosphere is vacuum, argon, helium or nitrogen;

under the first set atmosphere, each metal powder, metal oxide or metal hydride respectively reacts in situ with C or Si to generate a carbide, nitride, carbonitride, or silicide ceramic; and

in step S5, the second set atmosphere is vacuum, argon, helium or nitrogen.

Preferably, in the raw material powder, the molar ratio of each of the metal powders is 1:1, the molar ratio of each of the metal oxide powders is 1:1, and the molar ratio of each of the metal hydride powders is 1: 1;

the molar ratio between C powder and each of the metal powders or each of the metal hydride powders is 1:1, and the molar ratio between C powder and each of the metal oxide powders is 3: 1; and

the molar ratio between Si powder and each of the metal powders, each of the metal oxide powders or each of the metal hydride powders is 1:1.

A high-entropy ceramic inert matrix dispersion fuel pellet is further provided, which is formed by using the preparation method of a high-entropy ceramic inert matrix dispersion fuel pellet as described in any one of the foregoing.

The invention has the following beneficial effects: the high-entropy ceramic inert matrix dispersion fuel pellet is prepared by a two-step process of in situ reaction-solution and sintering treatment, using high-entropy ceramic inert matrix as the matrix of fuel pellet; the high-entropy ceramic inert matrix dispersion fuel pellet has higher high temperature resistance, corrosion resistance and radiation resistance performance compared to SiC inert matrix fuel pellet, realizing the characteristics of high thermal conductivity, low swelling rate, easy post-processing, and suitable for industrialized production of fuel pellet; the nuclear fuel containment under the condition of damaged nuclear reactor cladding is improved, the leakage of nuclear fuel is prevented, and the safety of nuclear power is improved; the high temperature resistance of nuclear fuel is also improved, and the application of nuclear fuel in high temperature reactor is promoted.

The high-entropy ceramic inert matrix dispersion fuel pellet of the present invention is suitable for fuel pellets in nuclear reactors such as light water reactor, gas cooled reactor (high temperature gas reactor or ultra-high temperature gas reactor), molten metal cooled reactor, or fast neutron breeder reactor.

**BRIEF DESCRIPTION OF THE DRAWINGS**

The invention will be further described below in conjunction with accompanying drawings and embodiments. In the drawings,

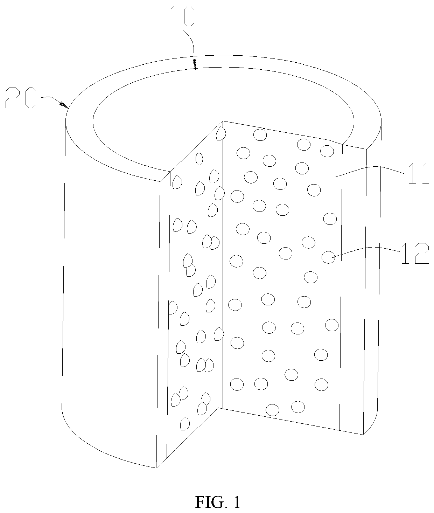

FIG. 1 is a sectional structure view of a high-entropy ceramic inert matrix dispersion fuel pellet of the present invention.

**DESCRIPTION OF THE EMBODIMENTS**

The preparation method of a high-entropy ceramic inert matrix dispersion fuel pellet of the present invention may include the following steps:
S1, preparing a raw material powder into a slurry and a mixed powder respectively.

The step S1 may further include:
S1.1, mixing the raw material powder, a dispersant and an organic solvent to form the slurry.

Specifically, the raw material powder, dispersant and organic solvent are ball-milled and mixed on a roller ball mill, and ball-milled at a rotation speed of 50 r/min to 200 r/min for 1 h to 10 h. The grinding ball used is silicon nitride, and the ball-to-material ratio (the mass ratio of the grinding ball to the mixed material) is 1:1 to 4:1.

In the slurry, the mass ratio of the organic solvent to the raw material powder is 1:1 to 3:1.

The dispersant is at least one of polyethyleneimine and tetramethylammonium hydroxide. The organic solvent is at least one of anhydrous ethanol and acetone.

S1.2, drying a part of the mixed slurry to form the mixed powder; or, mixing the raw material powder with a dispersant to form the mixed powder.

In the slurry and the mixed powder, the mass percentage of the dispersant is 0.5% to 4% of the raw material powder.

The raw material powder includes five or more metal powders, metal oxide powders or metal hydride powders. Alternatively, the raw material powder includes C powder (carbon powder) or Si powder (silicon powder), and five or more metal powders, metal oxide powders or metal hydride powders. The particle size of the raw material powder is 10 nm to 200 $\mu$m.

In the raw material powder, the metal in the metal powder, metal oxide powder and metal hydride powder includes at least five of Zr, Ti, Nb, Ta, V, Cr, Mo, and W. Therefore, when the raw material powder includes at least five metal powders, that is, at least five of Zr powder, Ti powder, Nb powder, Ta powder, V powder, Cr powder, Mo powder and W powder are included, and the molar ratio between each of the metal powders is 1:1. When the raw material powder includes at least five metal oxide powders, that is, at least five oxides corresponding to the foregoing metals are included, and the molar ratio between each of the metal oxide powders is 1:1. When the raw material powder includes at least five metal hydride powders, it includes at least five hydrides corresponding to the foregoing metals, and the molar ratio between each of the metal hydride powders is 1:1.

When the raw material powder further includes C powder, the molar ratio between the C powder and each of the metal powders or each of the metal hydride powders is 1:1, and the molar ratio between the C powder and each of the metal oxide powders is 3: 1.

When the raw material powder further includes Si powder, the molar ratio between the Si powder and each of the metal powders, each of the metal hydride powder or each of the metal hydride powders is 1:1.

S2, spraying the slurry on the surface of the rolling fuel particles by using a pneumatic spray device, and drying to form a coating layer adhered to the surface of the fuel particles.

The fuel particles are heated to 50°C to 100°C while rolling. Due to the heating effect, the organic solvents in the slurry are removed by volatilization.

The fuel particles may include at least one of TRISO particles, $UO_2$, UC, $UC_2$, UN, UCN, UCO, $U_3Si_2$, U alloys, $PuO_2$, PuC, PuN and Pu alloys. The core of the TRISO particles includes at least one of $UO_2$, UC, $UC_2$, UN, UCN, UCO, $U_3Si_2$ and U alloys.

S3, mixing a part of the mixed powder with fuel particles with the coating layer in proportion, and pressing to form a columnar core biscuit; pressing another part of the mixed powder to form a cylindrical core-shell biscuit.

The core biscuit is molded at a pressure of 10 MPa to 100 MPa. The core biscuit may be 6 mm to 8 mm in diameter and 8 mm to 24 mm in height.

The core-shell biscuit is molded at a pressure of 30 MPa to 400 MPa. The core-shell biscuit may be 6.2 mm to 8.2 mm in inner diameter, 8.5 mm to 10 mm in external diameter and 8 mm to 24 mm in height.

S4, loading the core biscuit into the core-shell biscuit, and performing heat treatment under a first set atmosphere to make the raw material powder in the core biscuit and core-shell biscuit reacts in situ to obtain a ceramic blank.

The temperature of the heat treatment is 800°C-1200°C, preferably 1000°C-1200°C. After the heat treatment temperature reaches the desired temperature, keep the temperature for 0.5 h-10 h, preferably 0.5 h-2 h.

S5, performing solution and sintering treatment on the ceramic blank in a second set atmosphere to form a densified high-entropy ceramic inert matrix dispersion fuel pellet.

The solution and sintering treatment may be carried out under no pressure. The temperature of solution and sintering treatment is 1300°C-1550°C, preferably 1400°C-1550°C. After the temperature of solution and sintering treatment reaches the desired temperature, keep the temperature for 0.5 h-10 h, preferably 0.5 h-2 h.

Optionally, when the raw material powder is a mixture of five (or more) metal powders, five (or more) metal oxide powders, or five (or more) metal hydride powders, in step S4, the first set atmosphere is nitrogen. Under a nitrogen atmosphere, each metal powder, metal oxide or metal hydride respectively reacts in situ with nitrogen to generate a nitride ceramic.

The reaction formula for the in situ reaction between metal powder (M) and nitrogen ($N_2$) to generate nitride is as follows:

$$2M + xN_2 = 2MN_X$$

The reaction formula for the in situ reaction between metal hydride powder (MHx) with nitrogen ($N_2$) to form nitride is as follows:

$$3MH_X + (x/2 + 3y/2)N_2 = 3MN_y + xNH_3$$

In each of the above reaction formulas, x is 1-4, usually 1 or 2, and y is 1-2, usually 1.

In the solution and sintering treatment of step S5, the second set atmosphere is vacuum, argon, helium or nitrogen, and under this second set atmosphere, each of the nitride ceramics is solid-melted to form a whole.

When the raw material powder includes five or more metal powder, metal oxide powder, or metal hydride powder, and further includes C powder or Si powder, in step S4, the first set atmosphere is vacuum, argon, helium, or nitrogen. Under the first set atmosphere, each metal powder, metal oxide or metal hydride respectively reacts in situ with C or Si to generate a carbide, nitride, carbonitride, or silicide ceramic.

The reaction formula for the in situ reaction between metal powder (M) and C to generate carbide is as follows:

$$M + xC = MC_X$$

The reaction formula for the in situ reaction between metal oxide powder (MOx) and C to generate carbide is as follows:

$$MO_X + (x+y)C = MC_y + xCO$$

The reaction formula for the in situ reaction between metal hydride powder (MHx) and C to generate carbide is as follows:

$$2MH_X + 2yC = 2MC_y + xH_2$$

The reaction formula for the in situ reaction between metal hydride powder (MHx) and C to generate carbonitride is as follows:

$$MO_X + (x+y/2)C + (x/2+y/4)N_2 = M(C_{0.5}N_{0.5})_y + xCO$$

The reaction formula for the in situ reaction between metal (M) and Si to generate silicide is as follows:

$$2M + xSi = 2MSi_X$$

The reaction formula for the in situ reaction between metal hydride powder (MHx) and Si to generate silicide is as follows:

$$2MH_X + 2ySi = 2MSi_y + xH_2$$

In each of the above reaction formulas, x is 1-4, usually 1 or 2, and y is 1-2, usually 1.

After the in situ reaction, In the solution and sintering treatment of step S5, the second set atmosphere is vacuum, argon, helium or nitrogen.

In the preparation method described above, the in situ reaction carried out in the raw material powder reduces the impurity content of the high-entropy powder and improves the purity of the high-entropy ceramic inert matrix, while reducing the preparation cost.

The densified high-entropy ceramic inert matrix dispersion fuel pellet prepared above has a density higher than 95% and an impurity oxygen element content lower than 0.1 wt%.

Referring to FIG. 1, a high-entropy ceramic inert matrix dispersion fuel pellet prepared by the preparation method of the present invention includes a columnar fuel zone 10 and a cylindrical fuel-free zone 20. The fuel zone 10 is provided in the fuel-free zone 20 and the two are closely combined. The fuel zone 10 is formed from a core biscuit and the fuel-free zone 20 is formed from a core-shell biscuit. The fuel zone 10 includes a high-entropy ceramic inert matrix 11 and fuel particles 12 dispersed in the high-entropy ceramic inert matrix 11. The high-entropy ceramic inert matrix 11 and the fuel-free zone 20 are both formed from the raw material powder by in situ reaction and solution and sintering treatment.

The high-entropy ceramic inert matrix 11 has higher high temperature resistance, corrosion resistance and radiation resistance performance compared to SiC inert matrix, which can improve the high temperature stability and thermal conductivity after irradiation of nuclear fuel, reduce the risk of core melting, and improve safety. With the increase of irradiation dose and temperature, the swelling rate of the high-entropy ceramic inert matrix 11 of the fuel can be kept below 0.3%. In spent fuel reprocessing, strong acid or fluoride salts can be used for wet or dry separation.

The present invention is further described below by way of specific embodiments.

Embodiment 1

$ZrO_2$, $TiO_2$, $NbO_2$, $TaO_2$, $MoO_2$ and C are used as raw material powders with a purity of 99.9% and a particle size of 20 nm. The molar ratio between the above each of the metal oxide powders is 1:1, and the molar ratio between the above each of the metal oxide powders and C is 1:3. Polyethyleneimine is used as a dispersant, the content of which accounts for 2 wt% of the above raw material powders. Anhydrous ethanol is used as an organic solvent, and the ratio of mass of the organic solvent and the combination of the above raw material powders and dispersant is 2:1. In accordance with the above ratio in a roller ball mill for mixing, with a grinding ball for silicon nitride, a rotation speed of 100 r/min, and a ball milling time of 12 h. The slurry is obtained after ball milling, and a part of the slurry is prepared into mixed powder by rotary evaporation and drying.

TRISO particles loaded with $UO_2$ uranium fuel are used as fuel particles, and the TRISO particles consist of a loose pyrolytic carbon layer, an inner dense pyrolytic carbon layer, a silicon carbide layer, and an outer dense pyrolytic carbon layer from inside to outside. The TRISO particles were heated up to 90°C in a rolling state, and the above slurry was "dressed" on the TRISO particles by spray deposition. The organic solvent is removed from the "dressed" TRISO particles at 90°C to obtain the "dressed" TRISO particles. Subsequently, the "dressed" TRISO particles and the mixed powder prepared previously are dry pressed at a mass ratio of 40 wt% with a mechanical pressurization pressure of 100 MPa, and a columnar core biscuit with a diameter of 8 mm and a height of 8 mm is obtained by pressing.

Then the mixed powder without fuel particles is pressed at a pressure of 80 MPa to make a core-shell biscuit with an inner diameter of 8.2 mm, an outer diameter of 10 mm, and a height of 8 mm. The above core biscuit is loaded into the core-shell biscuit; the temperature is raised to 1000 °C at 20 °C/min in a pressureless furnace and held for 2 h, then raised to 1500 °C and held for 1 h. The sintering atmosphere is argon. Through the above operation, the high-entropy ceramic inert matrix dispersion fuel pellet $((Zr_{0.2}Ti_{0.2}Nb_{0.2}Ta_{0.2}Mo_{0.2})C)$ is obtained, and the density of the high-entropy ceramic inert matrix reaches 96%.

In the obtained $((Zr_{0.2}Ti_{0.2}Nb_{0.2}Ta_{0.2}Mo_{0.2})C)$ high-entropy ceramic inert matrix dispersion fuel pellet, TRISO particles disperse in the core of the inert matrix nuclear fuel, and the fuel-free zone at the edge further prevents the leakage of nuclear fuel due to the breakage of TRISO particles.

The above obtained fuel pellet is loaded into the cladding tube to complete the assembly, and the assembled and sealed cladding can be used for light water reactor, high temperature gas cooled reactor, lava reactor and other reactor types.

Embodiment 2

Zr , Cr , Nb , Ta , Mo and C are used as raw material powders with a purity of 99.99% and a particle size of 100 nm. The molar ratio between the above each of the metal powders is 1:1, and the molar ratio between the above each of the metal powders and C is 1: 1. A core-shell biscuit and a core biscuit are respectively prepared according to the method of Embodiment 1. The core biscuit is molded at a pressure of 50 MPa, with a diameter of 7 mm and a height of 10 mm. The core-shell biscuit is molded at a pressure of 200 MPa, with an inner diameter of 7.2 mm, an outer diameter of 9 mm and a height of 10 mm. The above core biscuit is loaded into the core-shell biscuit and then sintered in a pressureless furnace, heated to 1200°C at a rate of 15°C/min, held for 1.5 h, then heated to 1550°C and held for 2 h, and the sintering atmosphere is vacuum. A high-entropy ceramic inert matrix dispersion fuel pellet $((Zr_{0.2}Cr_{0.2}Nb_{0.2}Ta_{0.2}Mo_{0.2})C)$ is obtained, and the density of the high-entropy ceramic inert matrix is 98%.

Embodiment 3

$ZrO_2$ , $CrO_2$ , $NbO_2$ , $VO_2$ , $TaO_2$ , $MoO_2$ and C are used as raw material powders with a purity of 99.99% and a particle size of 100 nm. The molar ratio between the above each of the metal oxide powders is 1:1, and the molar ratio between the above each of the metal oxide powders and C is 1:3.
A core-shell biscuit and a core biscuit are respectively prepared according to the method of Embodiment 1. The core biscuit is molded at a pressure of 100 MPa, with a diameter of 8 mm and a height of 20 mm. The core-shell biscuit is molded at a pressure of 400 MPa, with an inner diameter of 8.2 mm, an outer diameter of 10 mm and a height of 20 mm. The above core biscuit is loaded into the core-shell biscuit and then sintered in a pressureless furnace, heated to 1100°C at a rate of 5°C/min, held for 2 h, then heated to 1450°C and held for 4 h, and the sintering atmosphere is nitrogen. A high-entropy ceramic inert matrix dispersion fuel pellet $((Zr_{0.16}Cr_{0116}Nb_{0.16}Ta_{0.16}Mo_{0.16})C_{0.5}N_{0.5})$ is obtained, and the density of the high-entropy ceramic inert matrix is 97%.

Embodiment 4

$ZrH_2$ , $TiH_2$ , $NbH_2$ , $VH_2$ , $TaH_2$ , $MoH_2$ and Si are used as raw material powders with a purity of 99.99% and a particle size of 50 nm. The molar ratio between the above each of the metal hydride powders is 1:1, and the molar ratio between the above each of the metal hydride powders and Si is 1:1.
A core-shell biscuit and a core biscuit are respectively prepared according to the method of Embodiment 1. The core biscuit is molded at a pressure of 10 MPa, with a diameter of 8 mm and a height of 24 mm. The core-shell biscuit is molded at a pressure of 300 MPa, with an inner diameter of 8.2 mm, an outer diameter of 10 mm and a height of 24 mm. The above core biscuit is loaded into the core-shell biscuit and then sintered in a pressureless furnace, heated to 900°C at a rate of 10°C/min, held for 4 h, then heated to 1500°C and held for 1 h, and the sintering atmosphere is vacuum. A high-entropy ceramic inert matrix dispersion fuel pellet $((Zr_{0.2}Ti_{0.2}Nb_{0.2}Ta_{0.2}Mo_{0.2})Si)$ is obtained, and the density of the high-entropy ceramic inert matrix is 98%.

Embodiment 5

Zr , Cr , Nb , Ta , V and Si are used as raw material powders with a purity of 99.99% and a particle size of 200 μm. The molar ratio between the above each of the metal powders is 1:1, and the molar ratio between the above each of the metal powders and Si is 1:1.
A core-shell biscuit and a core biscuit are respectively prepared according to the method of Embodiment 1. The core biscuit is molded at a pressure of 100 MPa, with a diameter of 6 mm and a height of 8 mm. The core-shell biscuit is molded at a pressure of 400 MPa, with an inner diameter of 6.2 mm, an outer diameter of 8 mm and a height of 8 mm. The above core biscuit is loaded into the core-shell biscuit and then sintered in a pressureless furnace, heated to 1000°C at a rate of 10°C/min, held for 3 h, then heated to 1550°C and held for 5 h, and the sintering atmosphere is vacuum. A high-entropy ceramic inert matrix dispersion fuel pellet $((Zr_{0.2}Cr_{0.2}Nb_{0.2}Ta_{0.2}V_{0.2})Si)$ is obtained, and the density of the high-entropy ceramic inert matrix is 96%.
The above are only embodiments of the present invention and do not limit the scope of the present invention. Any equivalent structure or equivalent process transformation made based on the content of the specification and the accompanying drawings of the present invention, or direct or indirect application in other related technical fields, fall equally within the patent scope of the present invention.

**Claims**

1. A preparation method of a high-entropy ceramic inert matrix dispersion fuel pellet, **characterized by** comprising the following steps:

   S1, preparing a raw material powder into a slurry and a mixed powder respectively; and
   wherein the raw material powder comprises five or more metal powders, metal oxide powders or metal hydride powders;
   S2, spraying the slurry on the surface of the rolling fuel particles, and drying to form a coating layer adhered to the surface of the fuel particles;
   S3, mixing a part of the mixed powder with fuel particles with the coating layer in proportion, and pressing to form a columnar core biscuit; pressing another part of the mixed powder to form a cylindrical core-shell biscuit;
   S4, loading the core biscuit into the core-shell biscuit, and performing heat treatment under a first set atmosphere to make the raw material powder in the core biscuit and core-shell biscuit reacts in situ to obtain a ceramic blank; and
   S5, performing solution and sintering treatment on the ceramic blank in a second set atmosphere to form a densified high-entropy ceramic inert matrix dispersion fuel pellet.

2. The preparation method of a high-entropy ceramic inert matrix dispersion fuel pellet according to claim 1, **characterized in that** the metal in the metal powder, metal oxide powder and metal hydride powder comprises at least five of Zr, Ti, Nb, Ta, V, Cr, Mo, and W; and a particle size of the raw material powder is 10 nm to 200 $\mu$m.

3. The preparation method of a high-entropy ceramic inert matrix dispersion fuel pellet according to claim 1, **characterized in that** step S1 comprises the following steps:

   S1.1, mixing the raw material powder, a dispersant and an organic solvent to form the slurry; and
   S1.2, drying a part of the mixed slurry to form the mixed powder; or, mixing the raw material powder with a dispersant to form the mixed powder.

4. The preparation method of a high-entropy ceramic inert matrix dispersion fuel pellet according to claim 3, **characterized in that** in the slurry, the mass ratio of the organic solvent to the raw material powder is 1:1 to 3:1; and the mass percentage of the dispersant is 0.5% to 4% of the raw material powder.

5. The preparation method of a high-entropy ceramic inert matrix dispersion fuel pellet according to claim 3, **characterized in that** the dispersant is at least one of polyethyleneimine and tetramethylammonium hydroxide; and the organic solvent is at least one of anhydrous ethanol and acetone.

6. The preparation method of a high-entropy ceramic inert matrix dispersion fuel pellet according to claim 1, **characterized in that** in step S2, the fuel particles comprise at least one of TRISO particles, $UO_2$, UC, $UC_2$, UN, UCN, UCO, $U_3Si_2$, U alloys, $PuO_2$, PuC, PuN and Pu alloys; and
   wherein the core of the TRISO particles comprises at least one of $UO_2$, UC, $UC_2$, UN, UCN, UCO, $U_3Si_2$ and U alloys.

7. The preparation method of a high-entropy ceramic inert matrix dispersion fuel pellet according to claim 1, **characterized in that** in step S2, heating to 50°C to 100°C while the fuel particles are rolling; and spraying the slurry on the surface of the fuel particles by using a pneumatic spray device.

8. The preparation method of a high-entropy ceramic inert matrix dispersion fuel pellet according to claim 1, **characterized in that** in step S3, the core biscuit is molded at a pressure of 10 MPa to 100 MPa; and the core-shell biscuit is molded at a pressure of 30 MPa to 400 MPa.

9. The preparation method of a high-entropy ceramic inert matrix dispersion fuel pellet according to claim 1, **characterized in that** in step S4, the temperature of the heat treatment is 800°C-1200°C; and
   in step S5, the temperature of solution and sintering treatment is 1300°C-1550°C.

10. The preparation method of a high-entropy ceramic inert matrix dispersion fuel pellet according to any one of claims 1-9, **characterized in that** in the case where the raw material powder is a mixture of five or more metal powders, five or more metal oxide powders, or five or more metal hydride powders, in step S4, the first set atmosphere is nitrogen;

under a nitrogen atmosphere, each metal powder, metal oxide or metal hydride respectively reacts in situ with nitrogen to generate a nitride ceramic; and
in step S5, the second set atmosphere is vacuum, argon, helium or nitrogen.

**11.** The preparation method of a high-entropy ceramic inert matrix dispersion fuel pellet according to claim 10, **characterized in that** the molar ratio between each of the powders of the raw material powder is 1:1.

**12.** The preparation method of a high-entropy ceramic inert matrix dispersion fuel pellet according to any one of claims 1-9, **characterized in that** the raw material powder further comprises C powder or Si powder;

in step S4, the first set atmosphere is vacuum, argon, helium or nitrogen;
under the first set atmosphere, each metal powder, metal oxide or metal hydride respectively reacts in situ with C or Si to generate a carbide, nitride, carbonitride, or silicide ceramic; and
in step S5, the second set atmosphere is vacuum, argon, helium or nitrogen.

**13.** The preparation method of a high-entropy ceramic inert matrix dispersion fuel pellet according to claim 12, **characterized in that** in the raw material powder, the molar ratio of each of the metal powders is 1:1, the molar ratio of each of the metal oxide powders is 1:1, and the molar ratio of each of the metal hydride powders is 1: 1;

the molar ratio between C powder and each of the metal powders or each of the metal hydride powders is 1:1, and the molar ratio between C powder and each of the metal oxide powders is 3:1; and
the molar ratio between Si powder and each of the metal powders, each of the metal oxide powders or each of the metal hydride powders is 1:1.

**14.** A high-entropy ceramic inert matrix dispersion fuel pellet, **characterized in that** it is formed by using the preparation method of a high-entropy ceramic inert matrix dispersion fuel pellet according to any one of claims 1-13.

FIG. 1

## INTERNATIONAL SEARCH REPORT

| International application No. |
|---|
| **PCT/CN2021/138442** |

### A. CLASSIFICATION OF SUBJECT MATTER

C04B 35/56(2006.01)i; C04B 35/58(2006.01)i; C04B 35/622(2006.01)i; G21C 3/62(2006.01)i; G21C 3/64(2006.01)i; G21C 21/02(2006.01)i

According to International Patent Classification (IPC) or to both national classification and IPC

### B. FIELDS SEARCHED

Minimum documentation searched (classification system followed by classification symbols)

C04B,G21C

Documentation searched other than minimum documentation to the extent that such documents are included in the fields searched

Electronic data base consulted during the international search (name of data base and, where practicable, search terms used)

CNABS, CNTXT, VEN, CNKI, ELSEVIER: 高熵, 陶瓷, 燃料芯块, 核, 包壳, high entropy, ceramics, fuel pellet, nuclear, clad

### C. DOCUMENTS CONSIDERED TO BE RELEVANT

| Category* | Citation of document, with indication, where appropriate, of the relevant passages | Relevant to claim No. |
|---|---|---|
| PX | CN 113603490 A (CHINA NUCLEAR POWER TECHNOLOGY RESEARCH INSTITUTE CO., LTD. et al.) 05 November 2021 (2021-11-05)<br>claims 1-14 | 1-14 |
| Y | CN 107180654 A (MATERIAL INST. OF CHINA ACADEMY OF ENGINEERING PHYSICS) 19 September 2017 (2017-09-19)<br>claims 1-10 | 1-14 |
| Y | CN 112094121 A (NINGBO BAY RESEARCH INSTITUTE, NINGBO INSTITUTE OF MATERIALS) 18 December 2020 (2020-12-18)<br>description, paragraphs 2-3 and 8-12 | 1-14 |
| A | EP 3401924 A1 (WESTINGHOUSE ELECTRIC SWEDEN AB.) 14 November 2018 (2018-11-14)<br>entire document | 1-14 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 April 2022** | **22 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/138442**

| Patent document cited in search report | | | Publication date (day/month/year) | Patent family member(s) | | | Publication date (day/month/year) |
|---|---|---|---|---|---|---|---|
| CN | 113603490 | A | 05 November 2021 | None | | | |
| CN | 107180654 | A | 19 September 2017 | CN | 107180654 | B | 01 May 2020 |
| CN | 112094121 | A | 18 December 2020 | None | | | |
| EP | 3401924 | A1 | 14 November 2018 | ES | 2776802 | T3 | 03 August 2020 |
| | | | | WO | 2018206234 | A1 | 15 November 2018 |
| | | | | US | 2020168351 | A1 | 28 May 2020 |
| | | | | JP | 2020519896 | A | 02 July 2020 |
| | | | | TW | 201901696 | A | 01 January 2019 |

Form PCT/ISA/210 (patent family annex) (January 2015)